# EUROPÄISCHE PATENTSCHRIFT

(11) **EP 3 033 668 B1**
(45) Veröffentlichungstag und Bekanntmachung des Hinweises auf die Patenterteilung: **31.03.2021**
(21) Anmeldenummer: 14752291.6
(22) Anmeldetag: 11.08.2014
(51) Int. Cl.: G06F 3/0488, G06F 3/0484

(54) **VERFAHREN ZUM BEREITSTELLEN EINER BEDIENVORRICHTUNG IN EINEM FAHRZEUG UND BEDIENVORRICHTUNG**
METHOD FOR PROVIDING A OPERATING DEVICE IN A VEHICLE AND OPERATING DEVICE
PROCÉDÉ DE FOURNITURE D'UN DISPOSITIF DE COMMANDE DANS UN VÉHICULE ET DISPOSITIF DE COMMANDE

(30) Priorität: 12.08.2013 DE 102013215904
(43) Veröffentlichungstag der Anmeldung: 22.06.2016
(73) Patentinhaber: Volkswagen Aktiengesellschaft, 38440 Wolfsburg (DE)
(72) Erfinder: SEITZ, Gordon, 38468 Ehra-Lessien (DE); KÖTTER, Nils, 38118 Braunschweig (DE); CZELNIK, Mark Peter, 38444 Wolfsburg (DE)
(86) Internationale Anmeldenummer: PCT/EP2014/067150
(87) Internationale Veröffentlichungsnummer: WO 2015/022286

(56) Entgegenhaltungen:
- EP-A1- 1 886 865
- EP-A1- 1 935 704
- EP-A2- 1 703 363
- WO-A2-2013/053466
- DE-A1-102007 023 290
- DE-A1-102007 029 618
- DE-A1-102011 117 289

## Beschreibung

Die vorliegende Erfindung betrifft ein Verfahren zum Bereitstellen einer Bedienvorrichtung in einem Fahrzeug. Die Bedienvorrichtung umfasst ein mobiles Gerät, das sich im Innenraum des Fahrzeugs befindet. Das mobile Gerät weist eine Anzeigefläche auf, auf der eine berührungsempfindliche Oberfläche ausgebildet ist. Es besitzt somit einen sogenannten Touchscreen. Bei dem Verfahren werden Graphikdaten erzeugt, die auf der Anzeigefläche des mobilen Geräts angezeigt werden. Ferner wird eine Annäherung eines Betätigungsobjekts an die berührungsempfindliche Oberfläche erfasst. Wenn erfasst wurde, dass sich ein Betätigungsobjekt an die berührungsempfindliche Oberfläche angenähert hat, wechselt die Darstellung auf der Anzeigefläche von einem Anzeigemodus in einen Bedienmodus, wobei im Bedienmodus zumindest ein betätigbares Schaltelement angezeigt wird. Die Erfindung betrifft des Weiteren eine Bedienvorrichtung in einem Fahrzeug. Die Bedienvorrichtung umfasst ein mobiles Gerät, das sich im Innenraum des Fahrzeugs befindet, wobei das mobile Gerät eine Anzeigefläche aufweist, auf der eine berührungsempfindliche Oberfläche ausgebildet ist. Die Bedienvorrichtung umfasst ferner eine Steuervorrichtung, die mit dem mobilen Gerät gekoppelt ist oder in das mobile Gerät integriert ist. Mit der Steuervorrichtung sind Graphikdaten erzeugbar, die auf der Anzeigefläche des mobilen Geräts anzeigbar sind. Die Bedienvorrichtung umfasst des Weiteren eine Annäherungserfassungseinrichtung zum Erfassen eines Betätigungsobjekts, das sich an die berührungsempfindliche Oberfläche annähert.

Mobile Geräte, wie beispielsweise sogenannte Smartphones, werden immer leistungsfähiger. Gleichzeitig steigt die Verbreitung solcher Geräte. Es besteht daher die Möglichkeit, mobile Geräte mit Einrichtungen des Fahrzeugs zu koppeln und sie in die Bedienvorrichtung des Fahrzeugs zu integrieren. Nachteilig an der Verwendung von herkömmlichen mobilen Geräten in einem Fahrzeug ist, dass die Bedienung dieser Geräte nicht für eine Nutzung durch den Fahrer eines Fahrzeugs während der Fahrt ausgelegt ist. Der Touchscreen solcher mobiler Geräte ist vielfach relativ klein und das Bedienkonzept ist nicht darauf abgestimmt, dass die Bedienung vom Nutzer so wenig Aufmerksamkeit wie nötig erfordert.

Beim Bereitstellen einer Bedienvorrichtung in einem Fahrzeug ist es jedoch wichtig, dass die Bedienvorgänge nicht zu einer Ablenkung des Fahrers während der Fahrt führt. Der Bedienvorgang im Fahrzeug sollte schnell, einfach und intuitiv auch vom Fahrer des Fahrzeugs während der Fahrt vorgenommen werden können.

Aus der EP 1 935 704 A1 ist eine Anzeige- und Bedienvorrichtung in einem Kraftfahrzeug bekannt. Bei dieser Vorrichtung wird mit einer Steuereinheit die Anzeigevorrichtung in einem Anzeigemodus und in einem Bedienmodus betrieben. Wenn ein Betätigungselement, wie beispielsweise der Finger eines Nutzers, sich an die Anzeigefläche annähert, wird dies erfasst und von dem Anzeigemodus in den Bedienmodus umgeschaltet.

Aus der DE 10 2007 023 290 A1 ist eine Multifunktionsanzeige- und Bedienvorrichtung bekannt, die einen Touchscreen umfasst. Auch bei dieser Vorrichtung wird von einem Anzeigemodus in einen Bedienmodus umgeschaltet, wenn sich ein Betätigungsobjekt an diesen Touchscreen annähert,

Ferner ist aus der WO 2013/053466 A2 ein Verfahren zum Bereitstellen einer Bedienvorrichtung bekannt, bei dem von einem Anzeigezustand in einen Bedienzustand gewechselt wird, wenn ein Betätigungsobjekt in einem Detektionsbereich vor einer Anzeigefläche erfasst wurde.

EP 1 886 865 A1 offenbart ein in ein KFZ eingebautes, touchscreenbasiertes grafisches Bediensystem, bei dem während der Wiedergabe von Multimediainhalten keine Bedienelemente auf dem Touchscreen sichtbar sind. Diese werden erst nach der Erkennung einer Annäherung eines Bedienelementes und der daraus abgeleiteten Erkenntnis, einer voraussichtlich bevorstehenden Bedieninteraktion, eingeblendet. Des Weiteren wird ein Umschalten in einen Vollbildmedienwiedergabenmodus allein durch eine Annäherung an den Touchscreen offenbart.

Der vorliegenden Erfindung liegt die Aufgabe zugrunde, ein Verfahren und eine Bedienvorrichtung der eingangs genannten Art bereitzustellen, welche eine schnelle, intuitive und einfache Bedienung der berührungsempfindlichen Oberfläche des mobilen Geräts auch dann ermöglichen, wenn das Erfassen der Annäherung des Betätigungsobjekts an die berührungsempfindliche Oberfläche nicht funktioniert oder fehlerhaft funktioniert.

Diese Aufgabe wird erfindungsgemäß durch ein Verfahren mit den Merkmalen des Anspruchs 1 und ein Bedienvorrichtung mit den Merkmalen des Anspruchs 3 gelöst. Vorteilhafte Ausgestaltungen und Weiterbildungen ergeben sich aus den abhängigen Ansprüchen.

Das erfindungsgemäße Verfahren ist dadurch gekennzeichnet, dass die Darstellung auf der Anzeigefläche auch dann von dem Anzeigemodus in den Bedienmodus wechselt, wenn erfasst wurde, dass das Betätigungsobjekt die berührungsempfindliche Oberfläche berührt.

Unter einem *Schaltelement* wird im Sinne der Erfindung ein Steuerelement einer graphischen Benutzerschnittstelle in dem Bedienmodus verstanden. Ein Schaltelement unterscheidet sich von Elementen und Flächen zur reinen Informationsanzeige, so genannten Anzeigeelementen, darin, dass sie auswählbar sind und ein Hinweis auf die Funktion des Schaltelements anders als im Anzeigemodus angezeigt wird. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden.

Bei dem Betätigungsobjekt, welches bei dem erfindungsgemäßen Verfahren verwendet wird, kann es sich beispielsweise um die Fingerspitze eines Nutzers, einen Betätigungsstift oder irgendein anderes Objekt handeln.

Bei herkömmlichen Verfahren, welche einen Anzeigemodus und einen Bedienmodus bei der Darstellung auf einer Anzeigefläche mit einer berührungsempfindlichen Oberfläche verwenden, sind im Anzeigemodus keine Bedienvorgänge ausführbar. Eine Betätigung der berührungsempfindlichen Oberfläche ist nur im Bedienmodus möglich. Bei einer Annäherung eines Betätigungsobjekts an die berührungsempfindliche Oberfläche wechselt die Darstellungsart jedoch automatisch in den Bedienmodus, so dass es normalerweise für den Nutzer unbeachtlich ist, dass im Anzeigemodus keine Betätigung möglich ist.

Bei der Verwendung eines mobilen Geräts in dem Fahrzeug ergibt sich jedoch das Problem, dass die Annäherung des Betätigungsobjekts an die berührungsempfindliche Oberfläche des mobilen Geräts möglicherweise nicht sicher erkannt wird. Das erfindungsgemäße Verfahren stellt für solche Fälle eine Rückfalllösung bereit. Selbst wenn sich die Darstellung auf der Anzeigefläche des mobilen Geräts im Anzeigemodus befindet, sind Betätigungen auf der berührungsempfindlichen Oberfläche möglich. Insbesondere führt die Berührung der berührungsempfindlichen Oberfläche zumindest dazu, dass die Darstellung auf der Anzeigefläche von dem Anzeigemodus in den Bedienmodus wechselt. Im Anzeigemodus können somit Eingaben vorgenommen werden, unabhängig davon, ob die Darstellung auf der Anzeigefläche auf Schaltelemente hinweist oder nicht.

Gemäß einer Ausgestaltung des erfindungsgemäßen Verfahrens ist das Schaltelement bei einer Teilfläche der berührungsempfindlichen Oberfläche definiert. Ferner können bei der Teilfläche auch mehrere Schaltelemente definiert sein. Bei einer Berührung dieser Teilfläche des Schaltelements oder bei der Berührung eines der Schaltelemente wird ein Steuersignal erzeugt. Dieses Steuersignal ist dem berührten Schaltelement zugeordnet und steuert beispielsweise die Funktion einer Einrichtung des Fahrzeugs. Bei dieser Ausgestaltung des erfindungsgemäßen Verfahrens wird im Bedienmodus bei der Teilfläche des Schaltelements ein Hinweis auf die Funktion des Steuersignals angezeigt. Im Anzeigemodus wird dieser Hinweis auf die Funktion hingegen nicht angezeigt. Bei der Berührung der Teilfläche des Schaltelements wird das Steuersignal jedoch auch im Anzeigemodus erzeugt. Auch wenn die Annäherungserfassung nicht funktionsfähig ist, kann der Nutzer somit das Steuersignal eines Schaltelements erzeugen, obwohl der Hinweis auf die Funktion des Steuersignals nicht angezeigt wird. Dies ist dann vorteilhaft, wenn der Nutzer bereits aus früheren Bedienvorgängen weiß, dass bei einer bestimmten Anzeige eine bestimmte Teilfläche der berührungsempfindlichen Oberfläche betätigbar ist.

In diesem Fall wechselt bei der Berührung der Teilfläche, bei der im Bedienmodus das Schaltelement oder eines der Schaltelemente angezeigt wird, ferner die Darstellung auf der Anzeigefläche von dem Anzeigemodus in den Bedienmodus, selbst wenn vorher keine Annäherung des Betätigungsobjekts an die berührungsempfindliche Oberfläche erfasst wurde. Hierdurch wird erreicht, dass bei den folgenden Betätigungen wieder entsprechende Hinweise auf die Funktion der Steuersignale angezeigt werden, die den Schaltelementen zugeordnet sind.

Gemäß dem erfindungsgemäßen Verfahren wechselt bei einer Berührung der berührungsempfindlichen Oberfläche außerhalb der Teilfläche, bei der im Bedienmodus das Schaltelement oder die Schaltelemente dargestellt werden, die Darstellung auf der Anzeigefläche von dem Anzeigemodus in den Bedienmodus, selbst wenn vorher keine Annäherung des Betätigungsobjekts an die berührungsempfindliche Oberfläche erfasst wurde. Der Nutzer kann somit bei einem Ausfall der Annäherungserfassung eine Wechsel von dem Anzeigemodus in den Bedienmodus manuell erzeugen, indem er die berührungsempfindliche Oberfläche des mobilen Geräts berührt. Wenn er die berührungsempfindliche Oberfläche bei der Teilfläche berührt, bei der im Bedienmodus ein Schaltelement dargestellt wird, erfolgt ein Wechsel in den Bedienmodus und gleichzeitig wird das Steuersignal für das entsprechende Schaltelement erzeugt.

Wenn der Nutzer hingegen die berührungsempfindliche Oberfläche außerhalb der Teilfläche, bei der im Bedienmodus eines der Schaltelemente dargestellt wird berührt, erfolgt nur ein Wechsel in den Bedienmodus, ohne dass das Steuersignal erzeugt wird. Das einem Schaltelement zugeordnete Steuersignal kann in diesem Fall insbesondere nur dann erzeugt werden, wenn die Berührung des Betätigungsobjekts bei der berührungsempfindlichen Oberfläche außerhalb der Teilfläche des Schaltelements oder der Schaltelemente wieder gelöst wurde und danach die berührungsempfindliche Oberfläche wieder bei der Teilfläche des Schaltelements von dem Betätigungsobjekt berührt wird. Da nach der ersten Berührung der berührungsempfindlichen Oberfläche die Darstellung in den Bedienmodus gewechselt hat, wird dem Nutzer für die zweite Berührung der berührungsempfindlichen Oberfläche wieder der Hinweis auf die Funktion des Steuersignals angezeigt, welches dem Schaltelement zugeordnet ist. Hierdurch wird der Nutzer bei der Betätigung des Schaltelements unterstützt.

Wenn im Bedienmodus für ein vordefiniertes Zeitintervall keine Eingaben auf der berührungsempfindlichen Oberfläche erfasst worden sind, wechselt die Darstellung auf der Anzeigefläche wieder von dem Bedienmodus in den Anzeigemodus. Hierdurch wird erreicht, dass die Darstellung auf der Anzeigefläche nicht unnötig lange im Bedienmodus verbleibt, insbesondere dann, wenn die Annäherungserfassung eine Fehlfunktion hat und ein Entfernen des Betätigungsobjekts von der berührungsempfindlichen Oberfläche nicht erfasst worden ist.

Die erfindungsgemäße Bedienvorrichtung ist dadurch gekennzeichnet, dass die Steuervorrichtung so ausgebildet ist, dass die Darstellung auf der Anzeigefläche von einem Anzeigemodus in einen Bedienmodus wechselt, wenn erfasst wurde, dass sich das Betätigungsobjekt an die berührungsempfindliche Oberfläche angenähert hat, wobei im Bedienmodus betätigbare Schaltelemente angezeigt werden, und die Darstellung auf der Anzeigefläche auch dann von dem Anzeigemodus in den Bedienmodus wechselt, wenn erfasst wurde, dass das Betätigungsobjekt die berührungsempfindliche Oberfläche berührt.

Die erfindungsgemäße Bedienvorrichtung ist insbesondere ausgebildet, das erfindungsgemäße Verfahren auszuführen. Sie weist somit auch dieselben Vorteile wie das erfindungsgemäße Verfahren auf.

Gemäß einer Ausgestaltung der erfindungsgemäßen Bedienvorrichtung ist die Steuervorrichtung eine auf dem mobilen Gerät ausführbare Anwendung. Hierdurch wird erreicht, dass es nicht erforderlich ist, eine in dem Fahrzeug vorgesehene Steuervorrichtung an verschiedene Modelle des mobilen Geräts anpassen zu müssen. Auf dem mobilen Gerät läuft jeweils eine an das Gerät angepasste Anwendung, welche die Steuervorrichtung bereitstellt.

Die Bedienvorrichtung weist insbesondere eine Halterung zum lösbaren Befestigen des mobilen Geräts auf. Die Annäherungserfassungseinrichtung ist in diesem Fall bei der Halterung angeordnet, so dass eine Annäherung des Betätigungsobjekts an die berührungsempfindliche Oberfläche des mobilen Geräts erfassbar ist, wenn das mobile Gerät an der Halterung befestigt ist. Vorteilhafterweise wird somit nicht eine etwaige Annäherungserfassungseinrichtung des mobilen Geräts genutzt, sondern eine in das Fahrzeug integrierte Annäherungserfassungseinrichtung. Hierdurch kann die Annäherung eines Betätigungsobjekts an die berührungsempfindliche Oberfläche des mobilen Geräts verlässlicher erfasst werden. Allerdings ist die Betätigung der berührungsempfindlichen Oberfläche des mobilen Geräts, wie vorstehend erläutert, auch dann möglich, wenn eine solche Annäherung fehlerhafterweise nicht erfasst wird.

Die Annäherungserfassungseinrichtung ist insbesondere in die Halterung integriert. Auf diese Weise kann die Annäherung an die berührungsempfindliche Oberfläche des mobilen Geräts so verlässlich wie möglich erfasst werden.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 2: zeigt ein Fahrzeug mit dem Ausführungsbeispiel der erfindungsgemäßen Bedienvorrichtung und
- Figuren 3 bis 9: zeigen Anzeigen auf der Anzeigefläche des mobilen Geräts, welche von einem Ausführungsbeispiel des erfindungsgemäßen Verfahrens erzeugt werden.

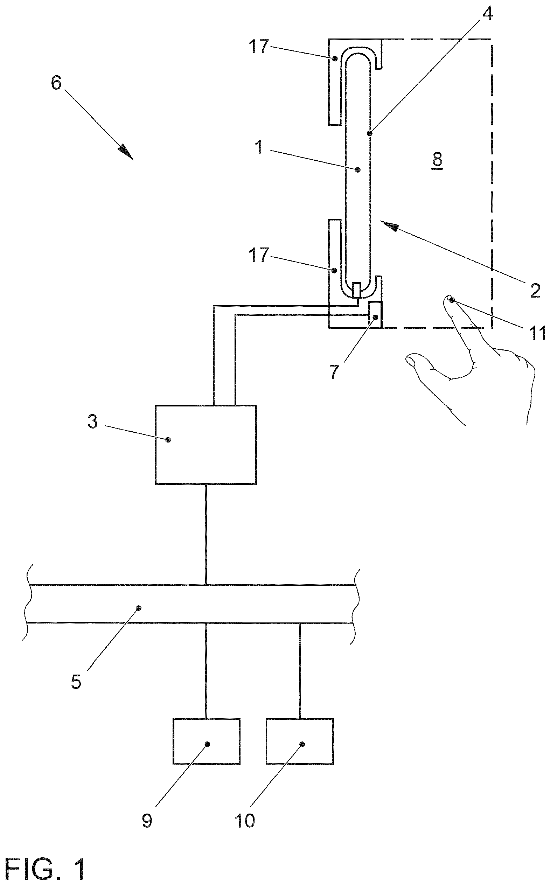

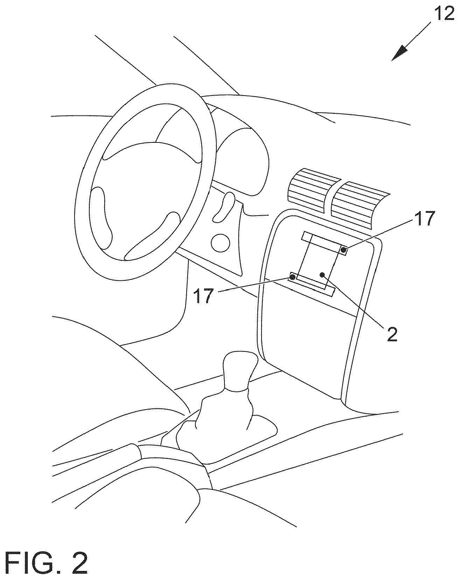

Mit Bezug zu den Figuren 1 und 2 wird zunächst ein Ausführungsbeispiel der erfindungsgemäßen Bedienvorrichtung 6 und deren Anordnung in einem Fahrzeug 12 erläutert:
Die Bedienvorrichtung 6 umfasst ein mobiles Gerät 1, welches mittels einer Halterung 17 so im Innenraum des Fahrzeugs 12 lösbar befestigt ist, dass die Anzeigefläche 2 des mobilen Geräts 1 zumindest für einen Fahrzeuginsassen, insbesondere für den Fahrer, gut sichtbar ist. Die Anzeigefläche 2 kann von einem Display, insbesondere einem Flüssigkristalldisplay, beliebiger Bauart bereitgestellt werden. Auf der Anzeigefläche 2 des mobilen Geräts 1 ist eine berührungsempfindliche Oberfläche 4 ausgebildet. Es wird somit ein sogenannter Touchscreen bereitgestellt. Bei dem mobilen Gerät 1 kann es sich beispielsweise um ein Smartphone oder eine mobile Navigationsvorrichtung handeln.

Die Bedienvorrichtung 6 umfasst ferner eine Steuervorrichtung 3, die mit dem mobilen Gerät 1 gekoppelt ist. Über diese Kopplung ist ein bidirektionaler Datenaustausch zwischen dem mobilen Gerät 1 und der Steuervorrichtung 3 möglich. Die Kopplung kann über eine Funkschnittstelle erfolgen oder, wie in Figur 1 gezeigt, über einen mechanisch/elektrischen Anschluss des mobilen Geräts 1 an eine Schnittstelle der Halterung 17 und eine Kabelverbindung zu der Steuervorrichtung 3. Die Steuervorrichtung 3 ist in diesem Fall in das Fahrzeug 12 integriert.

Bei einem anderen Ausführungsbeispiel ist die Steuervorrichtung 3 Teil des mobilen Geräts 1. Beispielsweise kann die Steuervorrichtung 3 eine auf dem mobilen Gerät 1 ausführbare Anwendung sein. Diese Anwendung kann beispielsweise automatisch gestartet werden, wenn das mobile Gerät 1 an der Halterung 17 befestigt wird. Schließlich kann die Funktion der Steuervorrichtung 3 auch gemeinsam von einer fahrzeugseitigen und mobilgeräteseitigen Steuervorrichtung bereitgestellt werden.

Des Weiteren umfasst die Bedienvorrichtung 6 eine Annäherungserfassungseinrichtung 7. Diese Annäherungserfassungseinrichtung 7 ist in die Halterung 17 integriert. Mittels ihr kann ein Betätigungsobjekt 11, wie beispielsweise die Fingerspitze 11 eines Nutzers, in einem Detektionsbereich 8 vor der berührungsempfindlichen Oberfläche 4 des mobilen Geräts 1 erfasst werden. Sobald das Betätigungsobjekt 11 in den Detektionsbereich 8 eintritt, wird dies von der Annäherungserfassungseinrichtung 7 erfasst und ein entsprechendes Signal an die Steuervorrichtung 3 übertragen. Hierfür ist die Annäherungserfassungseinrichtung 7 über eine Datenverbindung mit der Steuervorrichtung 3 gekoppelt. Außerdem erfasst die Annäherungserfassungseinrichtung 7, wenn das Betätigungsobjekt 11 sich nicht mehr in dem Detektionsraum 8 befindet. Auch in diesem Fall wird ein entsprechendes Signal an die Steuervorrichtung 3 übertragen.

Derartige Annäherungserfassungseinrichtungen 7 sind an sich bekannt. Weitere Details können beispielsweise der WO 2011/051361 A1 entnommen werden.

Schließlich ist die Steuervorrichtung 3 mit einem Datenbus 5 des Fahrzeugs 12 gekoppelt. Über diesen Datenbus 5 ist die Steuervorrichtung 3 mit weiteren Einrichtungen 9, 10 des Fahrzeugs 12 verbunden, zu denen Informationen auf der Anzeigefläche 2 angezeigt werden sollen und die mittels der Bedienvorrichtung 6 bedient werden sollen. Mittels des mobilen Geräts 1 der Bedienvorrichtung 6 können den Fahrzeuginsassen somit Informationen zu den Einrichtungen 9, 10 des Fahrzeugs 12 angezeigt werden. Ferner können die Fahrzeuginsassen mittels dem mobilen Gerät 1 die Einrichtungen 9, 10 steuern und bedienen.

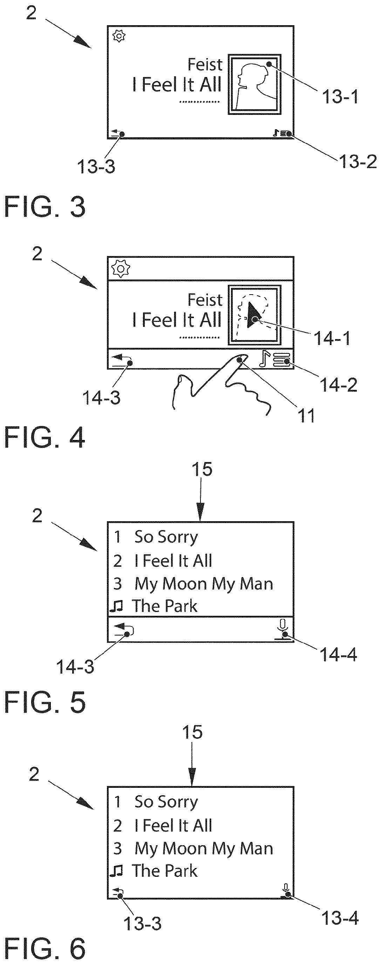

Im Folgenden werden weitere Details der Ausgestaltung der Steuervorrichtung 3 in Verbindung mit einem Ausführungsbeispiel des erfindungsgemäßen Verfahrens mit Bezug zu den Figuren 3 bis 9 erläutert:
Auf der Anzeigefläche 2 des mobilen Geräts 1 wird beispielsweise die in Figur 3 gezeigte Darstellung wiedergegeben. Die angezeigten Informationen gehören zu einer Musikwiedergabeeinrichtung des mobilen Geräts 1 oder des Fahrzeugs 12. Es werden insbesondere die Anzeigeelemente 13-1 bis 13-3 dargestellt.

Wenn der Nutzer nun die Musikwiedergabeeinrichtung bedienen will, nähert er sich mit seiner Fingerspitze 11 der berührungsempfindlichen Oberfläche 4 auf der Anzeigefläche 2 an, wie es in Figur 4 gezeigt ist. Sobald die Fingerspitze 11 des Nutzers in den Detektionsraum 8 eingetreten ist, überträgt die Annäherungserfassungseinrichtung 7 ein entsprechendes Signal an die Steuervorrichtung 3, welche dieses Signal an das mobile Gerät 1 weitergibt. Alternativ könnte das mobile Gerät 1 auch direkt mit der Annäherungserfassungseinrichtung 7 gekoppelt sein. Daraufhin wird von dem mobilen Gerät 1 oder der Steuervorrichtung 3 die Darstellung auf der Anzeigefläche 2 wie in Figur 4 gezeigt geändert: Die Anzeigeelemente 13-1 bis 13-3 wandeln sich in sogenannte Schaltelemente 14-1 bis 14-3 um, bei denen ein Hinweis auf die Funktion, die dem jeweiligen Schaltelement zugeordnet ist, angezeigt wird. Die Darstellung des Anzeigeelements 13-1 ändert sich zum Beispiel derart, dass im zugehörigen Schaltelement 14-1 durch ein dreieckiges Symbol angezeigt wird, dass der Nutzer bei Betätigung dieses Schaltelements 14-1 den Titel des gespielten Albums ändern kann. Die Anzeigeelemente 13-1 und 13-3 ändern sich so, dass die zugeordneten Symbole vergrößert dargestellt werden, wie es bei den Schaltelementen 14-2 und 14-3 der Figur 4 gezeigt ist. Diese Vergrößerung der Darstellung weist den Nutzer darauf hin, dass die Teilflächen, welche sich bei der berührungsempfindlichen Oberfläche 4 bei diesen Schaltelementen 14-2 und 14-3 befinden, betätigbar sind, indem sie mit der Fingerspitze 11 berührt werden. Gleichermaßen weist das Schaltelement 14-1 den Nutzer darauf hin, dass er die berührungsempfindliche Oberfläche 4 bei diesem Teilbereich berühren kann, um das Schaltelement 14-1 zu betätigen.

Die Darstellung auf der Anzeigefläche 2 wechselt somit von einem Anzeigemodus, wie er in Figur 3 gezeigt ist, in einen Bedienmodus, wie er in Figur 4 gezeigt ist, wenn von der Annäherungserfassungseinrichtung 7 erfasst wurde, dass sich ein Betätigungsobjekt 11, wie beispielsweise die Fingerspitze 11 eines Nutzers, an die berührungsempfindliche Oberfläche 4 angenähert hat. Die Annäherung wird ab dem Zeitpunkt erfasst, zu dem das Betätigungsobjekt 11 in den Detektionsraum 8 eingetreten ist. Im Bedienmodus werden dann betätigbare Schaltelemente 14-1 bis 14-3 angezeigt.

Sobald nach dem Eintritt des Betätigungsobjekts 11 in den Detektionsraum 8 der Nutzer das Schaltelement 14-1 berührt hat, wird dies von der Steuervorrichtung 3 bzw. dem mobilen Gerät 1 erfasst. Daraufhin wird ein dem Schaltelement 14-1 zugeordnetes Steuersignal erzeugt und die Darstellung auf der Anzeigefläche 2 wechselt in die in Figur 5 gezeigte Anzeige. Die Darstellung befindet sich weiterhin im Bedienmodus, wobei eine Liste 15 mit den Titeln des Albums angezeigt wird. Ferner kann weiterhin das Schaltelement 14-3 angezeigt werden. Statt des Schaltelements 14-2 wird bei diesem Menü im Bedienmodus das Schaltelement 14-4 für eine Spracheingabe angezeigt.

Der Nutzer kann nun einen bestimmten Titel auswählen, indem er die berührungsempfindliche Oberfläche 4 bei der Teilfläche berührt, bei welcher der entsprechende Titel angezeigt wird. Wenn für ein bestimmtes Zeitintervall keine Bedienung durch den Nutzer erfolgt, wechselt die Darstellung auf der Anzeigefläche 2 automatisch wieder zurück in den Anzeigemodus, wie es in Figur 6 gezeigt ist. Die Liste 15 wird in diesem Fall verkleinert dargestellt. Ferner werden die Schaltelemente 14-3 und 14-4 verkleinert als Anzeigeelemente 13-3 und 13-4 dargestellt.

Diese Art des Verfahrens, bei welcher die Darstellung auf der Anzeigefläche 2 von einem Anzeigemodus in einen Bedienmodus wechselt, wenn sich ein Betätigungsobjekt 11 an die berührungsempfindliche Oberfläche 4 annähert, ist an sich bekannt. Die Besonderheit des erfindungsgemäßen Verfahrens liegt nun darin, dass eine Rückfalllösung für den Fall bereitgestellt wird, in dem die Annäherungserfassungseinrichtung 7 eine Fehlfunktion aufweist. Beispielsweise wird der Eintritt der Fingerspitze 11 in den Detektionsraum 8 nicht von der Annäherungserfassungseinrichtung 7 erfasst. Bei der vorstehend beschriebenen Verfahrensführung, würde in diesem Fall kein Wechsel von dem Anzeigemodus in den Bedienmodus erfolgen und üblicherweise wäre auch keine Betätigung der berührungsempfindlichen Oberfläche 4 möglich.

Bei dem erfindungsgemäßen Verfahren sind jedoch auch im Anzeigemodus Eingaben über die berührungsempfindliche Oberfläche 4 des mobilen Geräts 1 möglich. Außerdem wechselt die Darstellung auf der Anzeigefläche 2 auch dann von dem Anzeigemodus in den Bedienmodus, wenn erfasst wurde, dass ein Betätigungsobjekt, wie im vorliegenden Fall die Fingerspitze 11 des Nutzers, die berührungsempfindliche Oberfläche 4 berührt. Dieser Wechsel von dem Anzeigemodus in den Bedienmodus erfolgt insbesondere auch dann, wenn vorher keine Annäherung der Fingerspitze 11 an die berührungsempfindliche Oberfläche 4 erfasst wurde.

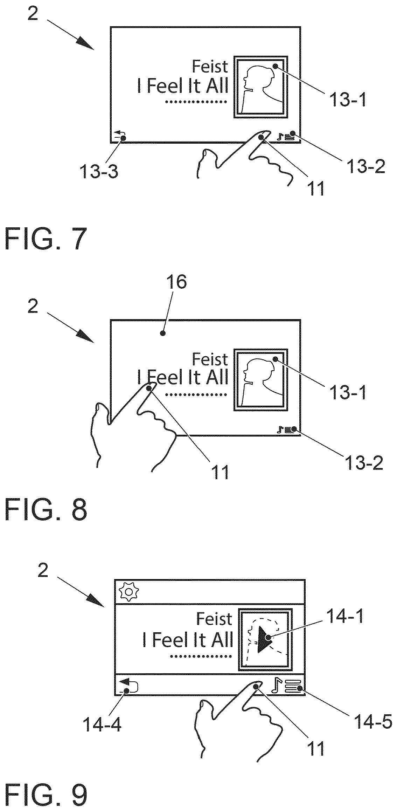

Der Ablauf des Verfahrens bei einer Fehlfunktion der Annäherungserfassungseinrichtung 7 wird im Folgenden mit Bezug zu den Figuren 3 bis 9 erläutert:
Wenn der Nutzer ausgehend von der Anzeige im Anzeigemodus gemäß Figur 3 sich mit seiner Fingerspitze 11 an die berührungsempfindliche Oberfläche 4 annähert und in den Detektionsraum 8 eintritt, erfolgt aufgrund der Fehlfunktion der Annäherungserfassungseinrichtung 7 kein Wechsel vom Anzeigemodus in den Bedienmodus. Die Darstellung verbleibt im Anzeigemodus, wie dies in Figur 7 gezeigt ist. Wenn der Nutzer nun aus früheren Bedienvorgängen weiß, dass sich bei dem Anzeigelement 13-1 im Bedienmodus ein Schaltelement befindet, kann er die Teilfläche der berührungsempfindlichen Oberfläche 4 bei dem Anzeigeelement 13-1 berühren. Diese Berührung wird auch im Anzeigemodus von dem mobilen Gerät 1 bzw. der Steuervorrichtung 3 erfasst und verarbeitet. Im Fall der direkten Bedienung einer Teilfläche der berührungsempfindlichen Oberfläche 4, die im Bedienmodus einem Schaltelement zugeordnet ist, erzeugt die Steuervorrichtung 3 oder das mobile Gerät 1 direkt ein Steuersignal, das dem entsprechenden Schaltelement 14-1 zugeordnet ist. Das heißt im vorliegenden Fall wechselt bei der Berührung dieser Teilfläche der berührungsempfindlichen Oberfläche 4 die Darstellung auf der Anzeigefläche 2 in den in Figur 5 gezeigten Zustand. Gleichzeitig wechselt die Darstellung auf der Anzeigefläche 2 von dem Anzeigemodus in den Bedienmodus.

Wenn der Nutzer nicht weiß, bei welchen Teilflächen der berührungsempfindlichen Oberfläche 4 sich im Bedienmodus Schaltelemente befinden, weil beispielsweise im Anzeigemodus kein Hinweis auf diese Teilfläche angezeigt wird oder weil der Nutzer entsprechende Bedienvorgängen bisher noch nicht ausgeführt hat, wechselt die Darstellung auf der Anzeigefläche 2 von dem Anzeigemodus in den Bedienmodus jedoch auch dann, wenn der Nutzer die berührungsempfindliche Oberfläche 4 außerhalb der Teilflächen berührt, die im Bedienmodus einem Schaltelement zugeordnet sind. Über diese indirekte Bedienung wechselt die Darstellung auf der Anzeigefläche 2 von dem Anzeigemodus in den Bedienmodus jedoch, ohne dass ein Steuersignal erzeugt wird, welches einem Schaltelement zugeordnet ist.

Im Bedienmodus wird dann die in Figur 9 wiedergegebene Anzeige im Bedienmodus dargestellt. Wenn der Nutzer nun die Berührung der berührungsempfindlichen Oberfläche 4 mit seiner Fingerspitze 11 wieder löst und anschließend beispielsweise das Schaltelement 14-1 berührt, erzeugt die Steuervorrichtung 3 oder das mobile Gerät 1 ein Steuersignal, welches zu einer Veränderung der Anzeige auf der Anzeigefläche 2 führt, so dass anschließend die in Figur 5 wiedergegebene Anzeige dargestellt wird.

Die berührungsempfindliche Oberfläche 4 ist somit in einen Teilbereich eingeteilt, bei denen sich im Bedienmodus die Schaltelemente 14 befinden, und einen anderen Teilbereich 16, bei denen sich im Bedienmodus keine Schaltelemente 14 befinden. Bei der Berührung beider Teilbereiche erfolgt ein Wechsel von dem Anzeigemodus in den Bedienmodus. Bei einer Berührung des Teilbereichs, bei dem sich im Bedienmodus die Schaltelemente 14 befinden, wird jedoch zusätzlich ein Steuersignal erzeugt, das einem Schaltelement 14 des Bedienmodus zugeordnet ist.

Auch bei einem Ausfall der Annäherungserfassungseinrichtung 7 kann der Nutzer somit das mobile Gerät 1 weiterhin bedienen und darüber die Einrichtungen 9, 10 des Fahrzeugs 12 steuern.

### BEZUGSZEICHENLISTE

- 1: mobiles Gerät
- 2: Anzeigefläche
- 3: Steuervorrichtung
- 4: berührungsempfindliche Oberfläche
- 5: Datenbus
- 6: Bedienvorrichtung
- 7: Annäherungserfassungseinrichtung
- 8: Detektionsraum
- 9: Einrichtung des Fahrzeugs
- 10: Einrichtung des Fahrzeugs
- 11: Betätigungsobjekt; Fingerspitze des Nutzers
- 12: Fahrzeug
- 13-1 bis 13-3: Anzeigeelemente
- 14, 14-1 bis 14-4: Schaltelemente
- 15: Liste
- 16: Bereich der berührungsempfindlichen Oberfläche außerhalb des Bereichs der Schaltelemente
- 17: Halterung

## Patentansprüche

1. Verfahren zum Bereitstellen einer Bedienvorrichtung (6) in einem Fahrzeug (12) zur Steuerung von Fahrzeugfunktionen, die ein mobiles Gerät (1) umfasst, das sich im Innenraum des Fahrzeugs (12) befindet, wobei das mobile Gerät (1) eine Anzeigefläche (2) aufweist, auf der eine berührungsempfindliche Oberfläche (4) ausgebildet ist, bei dem
- Graphikdaten erzeugt werden, die auf der Anzeigefläche (2) des mobilen Geräts (1) angezeigt werden,
- eine Annäherung eines Betätigungsobjekts (11) an die berührungsempfindliche Oberfläche (4) erfasst wird,
- die Darstellung auf der Anzeigefläche (2) von einem Anzeigemodus in einen Bedienmodus wechselt, wenn erfasst wurde, dass sich ein Betätigungsobjekt (11) an die berührungsempfindliche Oberfläche (4) angenähert hat und bei einer Berührung eines angezeigten Schaltelements (14) ein diesem Schaltelement zugeordnetes Steuersignal erzeugt wird, und
- für den Fall, dass durch eine Fehlfunktion nicht erfasst wurde, dass sich das Betätigungsobjekt (11) an die berührungsempfindliche Oberfläche (4) angenähert hat obwohl eine Annäherung des Betätigungsobjekts (11) an die berührungsempfindliche Oberfläche (4) erfolgt ist, die Darstellung auf der Anzeigefläche (2) während der Annäherung zunächst noch in dem Anzeigemodus erfolgt und dann aber von dem Anzeigemodus in den Bedienmodus wechselt, wenn erfasst wurde, dass das Betätigungsobjekt (11) die berührungsempfindliche Oberfläche (4) berührt, wobei im Bedienmodus bei der Teilfläche des Schaltelements (14) ein Hinweis auf die Funktion des Steuersignals angezeigt wird und
bei Berührung einer Teilfläche der berührungsempfindlichen Oberfläche (4), in der sich im Bedienmodus ein Schaltelement (14) befindet, ein diesem Schaltelement zugeordnetes Steuersignal erzeugt wird, und
bei Berührung einer Teilfläche der berührungsempfindlichen Oberfläche (4), in der sich im Bedienmodus kein Schaltelement (14) befindet, zunächst kein einem Schaltelement im Bedienmodus zugeordnetes Steuersignal erzeugt wird und erst bei anschließender erneuter Berührung der berührungsempfindlichen Oberfläche (4) im Bereich eines Schaltelements (14) ein diesem Schaltelement zugeordnetes Steuersignal erzeugt wird.

2. Verfahren nach Anspruch 1 **dadurch gekennzeichnet,**
**dass**, wenn im Bedienmodus für ein vordefiniertes Zeitintervall keine Eingaben auf der berührungsempfindlichen Oberfläche (4) erfasst worden sind, die Darstellung auf der Anzeigefläche (2) von dem Bedienmodus in den Anzeigemodus wechselt.

3. Bedienvorrichtung (6) in einem Fahrzeug (12) zur Steuerung von Fahrzeugfunktionen, mit!
- einem mobilen Gerät (1), das sich im Innenraum des Fahrzeugs (12) befindet, wobei das mobile Gerät (1) eine Anzeigefläche (2) aufweist, auf der eine berührungsempfindliche Oberfläche (4) ausgebildet ist,
- einer Steuervorrichtung (3), die mit dem mobilen Gerät (1) gekoppelt ist oder in das mobile Gerät (1) integriert ist, mit der Graphikdaten erzeugbar sind, die auf der Anzeigefläche (2) des mobilen Geräts (1) anzeigbar sind,
- einer Annäherungserfassungseinrichtung (7) zum Erfassen eines Betätigungsobjekts (11), das sich an die berührungsempfindliche Oberfläche (4) annähert,
wobei die Steuervorrichtung (3) so ausgebildet ist, dass die Darstellung auf der Anzeigefläche (2) von dem Anzeigemodus in einen Bedienmodus wechselt, wenn erfasst wurde, dass sich das Betätigungsobjekt (11) an die berührungsempfindliche Oberfläche (4) angenähert hat, wobei im Bedienmodus betätigbare Schaltelemente (14) angezeigt werden, und bei einer Berührung eines angezeigten Schaltelements (14) ein diesem Schaltelement zugeordnetes Steuersignal erzeugt wird, und
für den Fall, dass durch eine Fehlfunktion nicht erfasst wurde, dass sich das Betätigungsobjekt (11) an die berührungsempfindliche Oberfläche (4) angenähert hat obwohl eine Annäherung des Betätigungsobjekts (11) an die berührungsempfindliche Oberfläche (4) erfolgt ist, die Darstellung auf der Anzeigefläche (2) während der Annäherung zunächst noch in dem Anzeigemodus erfolgt und dann aber von dem Anzeigemodus in den Bedienmodus wechselt, wenn erfasst wurde, dass das Betätigungsobjekt (11) die berührungsempfindliche Oberfläche (4) berührt, wobei im Bedienmodus bei der Teilfläche des Schaltelements (14) ein Hinweis auf die Funktion des Steuersignals angezeigt wird und
bei Berührung einer Teilfläche der berührungsempfindlichen Oberfläche (4), in der sich im Bedienmodus ein Schaltelement (14) befindet, ein diesem Schaltelement zugeordnetes Steuersignal erzeugt wird, und
bei Berührung einer Teilfläche der berührungsempfindlichen Oberfläche (4), in der sich im Bedienmodus kein Schaltelement (14) befindet, zunächst kein einem Schaltelement im Bedienmodus zugeordnetes Steuersignal erzeugt wird und erst bei anschließender erneuter Berührung der berührungsempfindlichen Oberfläche (4) im Bereich eines Schaltelements (14) ein diesem Schaltelement zugeordnetes Steuersignal erzeugt wird.

4. Bedienvorrichtung (6) nach Anspruch 3, **dadurch gekennzeichnet,**
**dass** die Steuervorrichtung (3) eine auf dem mobilen Gerät (1) ausführbare Anwendung ist.

5. Bedienvorrichtung (6) nach Anspruch 3 oder 4, **dadurch gekennzeichnet,**
**dass** die Bedienvorrichtung (6) eine Halterung (17) zum lösbaren Befestigen des mobilen Geräts (1) aufweist und dass die Annäherungserfassungseinrichtung (7) bei der Halterung (17) angeordnet ist, so dass eine Annäherung des Betätigungsobjekts (11) an die berührungsempfindliche Oberfläche (4) des mobilen Geräts (1) erfassbar ist, wenn das mobile Gerät (1) an der Halterung (17) befestigt ist.

6. Bedienvorrichtung (6) nach Anspruch 5, **dadurch gekennzeichnet,**
**dass** die Annäherungserfassungseinrichtung (7) in die Halterung (17) integriert ist.

## Claims

1. Method for providing an operating device (6) in a vehicle (12) for controlling vehicle functions, which operating device (6) comprises a mobile device (1) that is located in the passenger compartment of the vehicle (12), wherein the mobile device (1) includes a display surface (2) on which a touch-sensitive surface (4) is formed, in which
- graphic data are generated that are displayed on the display surface (2) of the mobile device (1),
- an approach of an actuating object (11) toward the touch-sensitive surface (4) is detected,
- the presentation on the display surface (2) switches from a display mode to an operating mode if it has been detected that an actuating object (11) has approached the touch-sensitive surface (4) and, if a displayed switching element (14) is touched, a control signal associated with this switching element is generated, and
- in the event that it has not been detected, as a result of a malfunction, that the actuating object (11) has approached the touch-sensitive surface (4), even though the actuating object (11) did approach the touch-sensitive surface (4), the presentation on the display surface (2) initially still takes place in the display mode during the approach, but then switches from the display mode to the operating mode if it has been detected that the actuating object (11) touched the touch-sensitive surface (4), wherein in the operating mode an indication of the function of the control signal is displayed at the partial area of the switching element (14), and
upon touching a partial area of the touch-sensitive surface (4) in which a switching element (14) is located in the operating mode, a control signal associated with this switching element is generated, and
upon touching a partial area of the touch-sensitive surface (4) in which no switching element (14) is located in the operating mode, initially no control signal associated with a switching element in the operating mode is generated, and a control signal associated with this switching element is generated only if the touch-sensitive surface (4) is touched again in the region of a switching element (14).

2. The method according to claim 1,
**characterized in that**
if, in the operating mode, no inputs have been detected on the touch-sensitive surface (4) for a predefined time interval, the presentation on the display surface (2) switches from the operating mode to the display mode.

3. An operating device (6) in a vehicle (12) for controlling vehicle functions, having
- a mobile device (1) which is located in the passenger compartment of the vehicle (12), wherein the mobile device (1) includes a display surface (2) on which a touch-sensitive surface (4) is formed,
- a control device (3) which is coupled to the mobile device (1) or integrated into the mobile device (1), with which graphic data can be generated which can be displayed on the display surface (2) of the mobile device (1),
- an approach detection unit (7) for detecting an actuating object (11) that approaches the touch-sensitive surface (4),
wherein the control device (3) is designed so that the presentation on the display surface (2) switches from the display mode to an operating mode if it has been detected that the actuating object (11) has approached the touch-sensitive surface (4), wherein actuatable switching elements (14) are displayed in the operating mode, and if a displayed switching element (14) is touched, a control signal associated with this switching element is generated, and
in the event that it has not been detected, as a result of a malfunction, that the actuating object (11) has approached the touch-sensitive surface (4), even though the actuating object (11) did approach the touch-sensitive surface (4), the presentation on the display surface (2) initially still takes place in the display mode during the approach, but then switches from the display mode to the operating mode if it has been detected that the actuating object (11) touched the touch-sensitive surface (4), wherein in the operating mode an indication of the function of the control signal is displayed at the partial area of the switching element (14), and
upon touching a partial area of the touch-sensitive surface (4) in which a switching element (14) is located in the operating mode, a control signal associated with this switching element is generated, and
upon touching a partial area of the touch-sensitive surface (4) in which no switching element (14) is located in the operating mode, initially no control signal associated with a switching element in the operating mode is generated, and a control signal associated with this switching element is generated only if the touch-sensitive surface (4) is touched again in the region of a switching element (14).

4. The operating device (6) according to claim 3,
**characterized in that**
the control device (3) is an application executable on the mobile device (1).

5. The operating device (6) according to claim 3 or 4,
**characterized in that**
the operating device (6) comprises a mount (17) for releasably fastening the mobile device (1), and **in that** the approach detection unit (7) is arranged at the mount (17) so that it is possible to detect an approach of the actuating object (11) toward the touch-sensitive surface (4) of the mobile device (1) if the mobile device (1) is fastened to the mount (17).

6. The operating device (6) according to claim 5,
**characterized in that**
the approach detection unit (7) is integrated into the mount (17).

## Revendications

1. Procédé de fourniture d'un dispositif de commande (6) dans un véhicule (12) pour la commande de fonctions du véhicule, qui comprend un appareil mobile (1) qui se trouve à l'intérieur du véhicule (12), l'appareil mobile (1) comportant une surface d'affichage (2) sur laquelle est formée une surface tactile (4), dans lequel
- des données graphiques sont générées, qui sont affichées sur la surface d'affichage (2) de l'appareil mobile (1),
- une approche de la surface tactile (4) par un objet d'actionnement (11) est détectée,
- la représentation sur la surface d'affichage (2) passe d'un mode d'affichage à un mode de commande lorsqu'il a été détecté qu'un objet d'actionnement (11) s'est approché de la surface tactile (4) et, lorsqu'un élément de commande (14) affiché est touché, un signal de commande associé à cet élément de commande est généré et
- dans le cas où, à cause d'un dysfonctionnement, il n'a pas été détecté que l'objet d'actionnement (11) s'est approché de la surface tactile (4) bien qu'une approche de la surface tactile (4) par l'objet d'actionnement (11) ait été effectuée, la représentation sur la surface d'affichage (2) est d'abord effectuée en mode d'affichage au cours de l'approche, puis passe du mode d'affichage au mode de commande, lorsqu'il a été détecté que l'objet d'actionnement (11) touche la surface tactile (4), une indication de la fonction du signal de commande étant affichée en mode de commande sur la surface partielle de l'élément de commande (14) et
lorsqu'une surface partielle de la surface tactile (4) est touchée, dans laquelle se trouve un élément de commande (14) en mode de commande, un signal de commande associé à cet élément de commande est généré et
lorsqu'une surface partielle de la surface tactile (4), dans laquelle ne se trouve aucun élément de commande (14) en mode de commande, est touchée, aucun signal de commande associé à un élément de commande en mode de commande n'est généré et un signal de commande associé à un élément de commande n'est généré que lorsque la surface tactile (4) dans la zone de cet élément de commande (14) est touchée de nouveau ultérieurement.

2. Procédé selon la revendication 1
**caractérisé**
**en ce que,** si aucune entrée n'a été détectée sur la surface tactile (4) en mode de commande pendant un intervalle de temps prédéfini, la représentation sur la surface d'affichage (2) passe du mode de commande au mode d'affichage.

3. Dispositif de commande (6) dans un véhicule (12) pour la commande de fonctions du véhicule, comprenant
- un appareil mobile (1) qui se trouve à l'intérieur du véhicule (12), l'appareil mobile (1) comportant une surface d'affichage (2) sur laquelle est formée une surface tactile (4),
- un dispositif de commande (3) couplé à l'appareil mobile (1) ou intégré dans l'appareil mobile (1), avec lequel des données graphiques peuvent être générées, qui sont affichables sur la surface d'affichage (2) de l'appareil mobile (1),
- un dispositif de détection d'approche (7) pour la détection d'un objet d'actionnement (11) s'approchant de la surface tactile (4),
dans lequel le dispositif de commande (3) est formé de telle sorte que la représentation sur la surface d'affichage (2) passe du mode d'affichage à un mode de commande lorsqu'il a été détecté que l'objet d'actionnement (11) s'est approché de la surface tactile (4), les éléments de commande actionnables (14) en mode de commande étant affichés et, lorsqu'un élément de commande (14) affiché est touché, un signal de commande associé à cet élément de commande étant généré et
dans le cas où, à cause d'un dysfonctionnement, il n'a pas été détecté que l'objet d'actionnement (11) s'est approché de la surface tactile (4) bien qu'une approche de la surface tactile (4) par l'objet d'actionnement (11) ait été effectuée, la représentation sur la surface d'affichage (2) est d'abord effectuée en mode d'affichage au cours de l'approche, puis passe du mode d'affichage au mode de commande, lorsqu'il a été détecté que l'objet d'actionnement (11) touche la surface tactile (4), une indication de la fonction du signal de commande étant affichée en mode de commande sur la surface partielle de l'élément de commande (14) et
lorsqu'une surface partielle de la surface tactile (4) est touchée, dans laquelle se trouve un élément de commande (14) en mode de commande, un signal de commande associé à cet élément de commande est généré et
lorsqu'une surface partielle de la surface tactile (4), dans laquelle ne se trouve aucun élément de commande (14) en mode de commande, est touchée, aucun signal de commande associé à un élément de commande en mode de commande n'est généré et un signal de commande associé à un élément de commande n'est généré que lorsque la surface tactile (4) dans la zone de cet élément de commande (14) est touchée de nouveau ultérieurement.

4. Dispositif de commande (6) selon la revendication 3,
**caractérisé**
**en ce que** le dispositif de commande (3) est une application exécutable sur l'appareil mobile (1).

5. Dispositif de commande (6) selon la revendication 3 ou 4,
**caractérisé**
**en ce que** le dispositif de commande (6) comporte un support (17) pour la fixation amovible de l'appareil mobile (1) et que le dispositif de détection d'approche (7) est agencé au niveau du support (17) de telle sorte qu'une approche de la surface tactile (4) de l'appareil mobile (1) par l'objet d'actionnement (11) soit détectable, lorsque l'appareil mobile (1) est fixé sur le support (17).

6. Dispositif de commande (6) selon la revendication 5,
**caractérisé**
**en ce que** le dispositif de détection d'approche (7) est intégré dans le support (17).
